(19)

Europäisches
Patentamt
European
Patent Office
Office européen
des brevets

(11) **EP 3 978 111 A1**

(12) **EUROPEAN PATENT APPLICATION**

(43) Date of publication:
06.04.2022 Bulletin 2022/14

(21) Application number: 21197894.5

(22) Date of filing: 21.09.2021

(51) International Patent Classification (IPC):
**B01J 23/40** (2006.01)     **B01D 53/94** (2006.01)
**B01J 35/10** (2006.01)

(52) Cooperative Patent Classification (CPC):
**B01J 23/40; B01D 53/9472; B01J 35/1042**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020 US 202063198150 P**

(71) Applicant: **Johnson Matthey Public Limited
Company
London EC4A 4AB (GB)**

(72) Inventor: **KADONO, Takeshi
Kitsuregawa, 329-1412 (JP)**

(74) Representative: **Wilson, Nicola Ann
Johnson Matthey Public Limited Company
Johnson Matthey Technology Centre
Blount's Court Road
Sonning Common
Reading, Berkshire RG4 9NH (GB)**

(54) **IMPROVED CATALYSTS FOR GASOLINE ENGINE EXHAUST GAS TREATMENTS**

(57)    A three-way catalyst article, and its use in an exhaust system for internal combustion engines, is disclosed. The catalyst article for treating exhaust gas comprising: a substrate comprising an inlet end and an outlet end with an axial length L; a first catalytic region comprising a first platinum group metal (PGM) component and a first oxygen storage capacity (OSC) material, wherein the first catalytic region has a washcoat porosity of less than 50%; and wherein the first OSC material has a pore: volume of at least 0.4 mL/g.

**FIG. 1**

Inlet

Outlet

1st Catalytic Region

Substrate Wall

EP 3 978 111 A1

**Description**

FIELD OF THE INVENTION

The present invention relates to a catalyzed article useful in treating exhaust gas emissions from gasoline engines.

BACKGROUND OF THE INVENTION

Internal combustion engines produce exhaust gases containing a variety of pollutants, including hydrocarbons (HCs), carbon monoxide (CO), and nitrogen oxides ("$NO_x$"). Emission control systems, including exhaust gas catalytic conversion catalysts, are widely utilized to reduce the amount of these pollutants emitted to atmosphere. A commonly used catalyst for gasoline engine exhaust treatments is the TWC (three way catalyst). TWCs perform three main functions: (1) oxidation of CO; (2) oxidation of unburnt HCs; and (3) reduction of $NO_x$.

Despite advances in TWC technology, there remains a need for improved catalytic converters for certain engine platforms that improve the performance especially in cold start and high-speed stages where most of emission is appeared during vehicle operation. This invention solves the problem through enhancement of the porosity in the TWC product.

SUMMARY OF THE INVENTION

One aspect of the present disclosure is directed to a catalytic article for treating exhaust gas comprising: a substrate comprising an inlet end and an outlet end with an axial length L; a first catalytic region comprising a first platinum group metal (PGM) component and a first oxygen storage capacity (OSC) material, wherein the first catalytic region has a washcoat porosity of less than 50 %; and wherein the first OSC material has a pore: volume of at least 0.4 mL/g.

The invention also encompasses an exhaust system for internal combustion engines that comprises the three-way catalyst component of the invention.

The invention also encompasses treating an exhaust gas from an internal combustion engine, in particular for treating exhaust gas from a gasoline engine. The method comprises contacting the exhaust gas with the three-way catalyst component of the invention.

BRIEF DESCRIPTION OF THE DRAWINGS

**FIG. 1** shows one embodiment according to the present invention, which contains first catalytic region with a length of 100% to the axial length L of the substrate (single layer).

**FIG. 2a** shows one embodiment according to the present invention, which contains the first catalytic region extends 100% of the axial length L, as bottom layer; the second catalytic region extends 100% of the axial length L, as top layer.

**FIG. 2b** shows one embodiment according to the present invention, which contains the first catalytic region with a length of 100% to the axial length L of the substrate as top layer, and a second catalytic region extends 100% of the axial length L, as bottom layer.

**FIG. 3a** shows one embodiment according to the present invention, the second catalytic region extends less than 100% of the axial length L, from the outlet end; the first catalytic region extends less than 100% of the axial length L, from the outlet end; the 3rd catalytic region extends less than 100% of the axial length L from the inlet end; and the first catalytic region is above the second catalytic region.

**FIG. 3b** shows one embodiment according to the present invention, the first catalytic region extends less than 100% of the axial length L, from the outlet end; the second catalytic region extends less than 100% of the axial length L, from the outlet end; the 3rd catalytic region extends less than 100% of the axial length L from the inlet end; and the second catalytic region is above the first catalytic region.

**FIG. 4a** shows cross-sectional image of scanning electron microscope (SEM) image of Comparative Catalyst A.

**FIG. 4b** shows cross-sectional image of SEM image of Catalyst B.

DETAILED DESCRIPTION OF THE INVENTION

The present invention is directed to the catalytic treatment of combustion exhaust gas, such as that produced by gasoline and other engines, and to related catalysts compositions, catalytic articles, and systems. More specifically, the invention relates the simultaneous treatment of $NO_x$, CO, and HC in a vehicular exhaust system. This invention has a potential to meet future-expected tighter emission regulation through optimized TWC formulations.

One aspect of the present disclosure is directed to a catalytic article for treating exhaust gas comprising: a substrate comprising an inlet end and an outlet end with an axial length L; a first catalytic region comprising a first platinum group metal (PGM) component and a first oxygen storage capacity (OSC) material, wherein the first catalytic region has a washcoat porosity of less than 50 %; and wherein the first OSC material has a pore: volume of at least 0.4 mL/g.

*First Catalytic Region*

The first PGM component can be selected from the group consisting of platinum, palladium, rhodium, and a combination thereof. In some embodiments, the first PGM component can be Pd, Rh or a mixture thereof. In other embodiments, the first PGM component can be platinum. In yet other embodiments, the first PGM component can be platinum and rhodium; palladium and rhodium; or platinum, palladium, and rhodium. In further embodiments, the first PGM component can be platinum and rhodium; or platinum, palladium, and rhodium. In certain embodiments, the first PGM component can be Rh. In some embodiments, the first PGM component can be Pd.

The first OSC material can be cerium oxide, zirconium oxide, a ceria-zirconia mixed oxide, an alumina-ceria-zirconia mixed oxide, or a combination thereof. More preferably, the first OSC material comprises the ceria-zirconia mixed oxide, the alumina-ceria-zirconia mixed oxide or a combination thereof. The ceria-zirconia mixed oxide can further comprise dopants, such as lanthanum, neodymium, praseodymium, yttrium oxides, *etc.* The first OSC material may function as a support material for the first PGM component. In some embodiments, the first OSC material comprises the ceria-zirconia mixed oxide and the alumina-ceria-zirconia mixed oxide.

Preferably, the first OSC material has a pore: volume of at least 0.5 mL/g; more preferably, at least 0.6 mL/g. Alternatively, in some embodiments, the first OSC material can have a pore: volume of 0.4 to 1.0 mL/g; 0.5 to 0.9 mL/g; 0.5 to 0.8 mL/g; or 0.6 to 0.8 mL/g.

In some embodiments, the first catalytic region can have a washcoat porosity of less than 40 %, less than 30% or less than 20%. Alternatively, in some embodiments, the first catalytic region can have a washcoat porosity of 5% to 50 %; 10% to 40%; 10% to 30%; or 10% to 20%.

In some embodiments, the first OSC material can have an average pore diameter of at least 20 nm, according to the basic premises of the classical BJH treatment. The average pore diameter can be measured by nitrogen adsorption/desorption isotherms at 76 K. The samples are outgassed at 350 °C for 2 hours prior to the adsorption run.

In certain embodiments, the first OSC material can have a fresh specific surface area (SSA) of at least 50 $m^2$/g. In further embodiments, the first OSC material can have an SSA of at least 60 $m^2$/g, or at least 70 $m^2$/g. The SSA can be measured by nitrogen adsorption/desorption isotherms at 76 K. The samples are outgassed at 350 °C for 2 hours prior to the adsorption run.

In certain embodiments, the first OSC material can have a particle size d50 of at least 5 $\mu$m; preferably, at least 10 $\mu$m. In some embodiments, the first OSC material can have a particle size d90 of at least 15 $\mu$m; preferably, at least 20 $\mu$m. Alternatively, in certain embodiments, the first OSC material can have a particle size d50 of 5-20 $\mu$m; preferably, 7-15 $\mu$m. In some embodiments, the first OSC material can have a particle size d90 of 15-40 $\mu$m; preferably, 20-30 $\mu$m.

In some embodiments, the first OSC material can maintain majority of its material pore structure (e.g., SSA, average pore diameter, and/or pore: volume) after the catalytic article is aged at 1000 °C for 20 hours (*e.g.,* in a static oven; *see* **Table B).** In certain embodiments, the first OSC material can have an average pore diameter of greater than 15 nm after aging; preferably, can have an average pore diameter of at least 20 nm after aging. In certain embodiments, the first OSC material can have an SSA of at least 45 $m^2$/g after aging; preferably, can have an SSA of at least 50 $m^2$/g after aging. In some embodiments, the first OSC material can have a pore: volume of greater than 0.2 mL/g after aging; preferably, can have a pore: volume difference of at least 0.25 mL/g or at least 0.3 mL/g.

The first catalytic region can further comprise a first inorganic oxide.

The first inorganic oxide is preferably an oxide of Groups 2, 3, 4, 5, 13 and 14 elements. The first inorganic oxide is preferably selected from the group consisting of alumina, magnesia, silica, zirconia, barium oxides, and mixed oxides or composite oxides thereof. Particularly preferably, the first inorganic oxide is alumina, lanthanum-alumina, zirconia, or a magnesia/alumina composite oxide. One especially preferred first inorganic oxide is alumina or lanthanum-alumina.

The first OSC material and the first inorganic oxide can have a weight ratio of no greater than 10:1; preferably, no greater than 8:1 or 5:1; more preferably, no greater than 4:1 or 3:1; most preferably, no greater than 2:1.

Alternatively, the first OSC material and the first inorganic oxide can have a weight ratio of 10:1 to 1:10; preferably, 8:1 to 1:8 or 5:1 to 1:5; more preferably, 4:1 to 1:4 or 3:1 to 1:3; and most preferably, 2:1 to 1:2.

In some embodiments, the first OSC material and the first inorganic oxide can have a weight ratio of no less than 2:1. In further embodiments, the first OSC material and the first inorganic oxide can have a weight ratio of no less than 10:1. In another further embodiments, the first OSC material and the first inorganic oxide can have a weight ratio of no less than 20:1 or no less than 30:1. In yet another further embodiments, the first OSC material and the first inorganic oxide can have a weight ratio of no less than 40:1 or no less than 50:1.

The first catalytic region may further comprise a first alkali or alkaline earth metal.

The first alkali or alkaline earth metal is preferably barium, or strontium, and mixed oxides or composite oxides thereof. Preferably the barium or strontium, where present, is loaded in an amount of 0.1 to 15 wt.%, and more preferably 3 to 10 wt.% of barium or strontium, based on the total weight of the first catalytic region.

Preferably the barium or the strontium is present as $BaCO_3$ or $SrCO_3$. Such a material can be performed by any method known in the art, for example incipient wetness impregnation or spray-drying.

The total washcoat loading of the first catalytic region can be less than 3.5 $g/in^3$; preferably, less than 3.0 $g/in^3$ or 2.5 $g/in^3$. Alternatively, the total washcoat loading of the first catalytic region can be from 0.5 to 3.5 $g/in^3$; preferably, can be from 0.6 to 3 $g/in^3$ or 0.7 to 2.5 $g/in^3$.

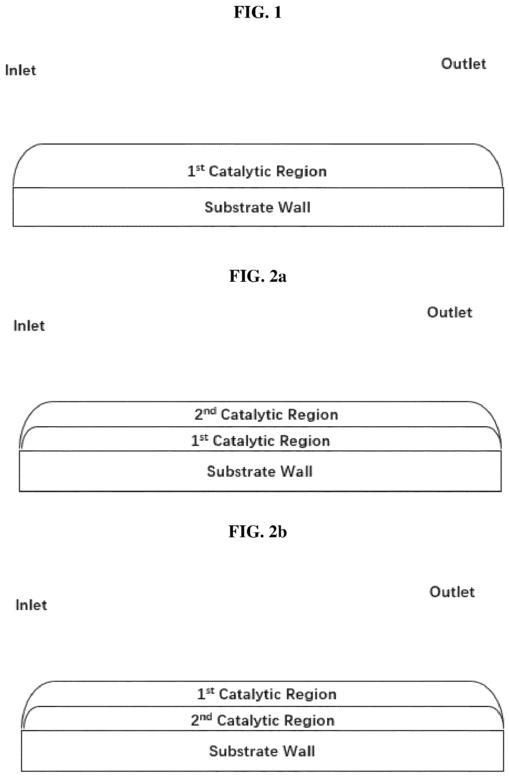

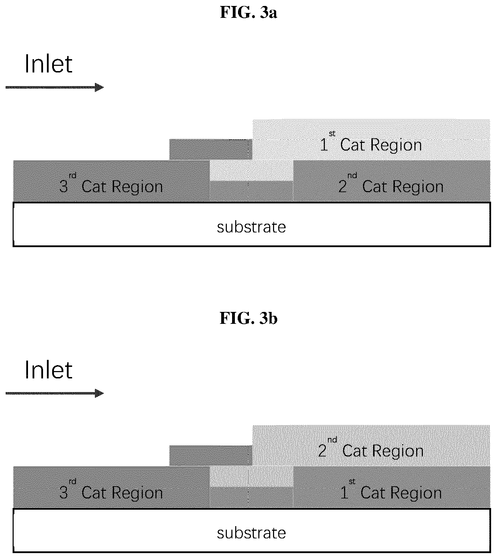

The first catalytic region can extend for 100 percent of the axial length L. (*E.g., see* **FIGs. 1, 2a,** and **2b**). In some embodiments, the first catalytic region can extend for 20 to 99%, 30 to 90%, or 40-80% of the axial length L. (*E.g., see* **FIGs. 3a** and **3b**).

*Second Catalytic Region*

The second catalytic region can further comprise a second PGM component, a second oxygen storage capacity (OSC) material, a second alkali or alkaline earth metal component, and/or a second inorganic oxide.

The second PGM component can be selected from the group consisting of platinum, palladium, rhodium, and a mixture thereof. In some embodiments, the second PGM component can be Pd, Rh or a mixture thereof. In certain embodiments, the second PGM component can be Pd. In some embodiments, the second PGM component can be Rh.

The second OSC material can be cerium oxide, zirconium oxide, a ceria-zirconia mixed oxide, an alumina-ceria-zirconia mixed oxide, or a combination thereof. More preferably, the second OSC material comprises the ceria-zirconia mixed oxide, the alumina-ceria-zirconia mixed oxide, or a combination thereof. In addition, the second OSC material may further comprise one or more of dopants like lanthanum, neodymium, praseodymium, yttrium *etc*. Moreover, the second OSC material may have the function as a support material for the second PGM component. In some embodiments, the second OSC material comprises the ceria-zirconia mixed oxide and the alumina-ceria-zirconia mixed oxide.

The ceria-zirconia mixed oxide can have a weight ratio of zirconia to ceria at least 50:50; preferably, higher than 60:40; more preferably, higher than 70:30. Alternatively, the ceria-zirconia mixed oxide also can have a weight ratio of ceria to zirconia less than 50:50, preferably, less than 40:60, more preferably, less than 30:70.

The second OSC material (e.g., ceria-zirconia mixed oxide) can be from 10 to 90 wt.%; preferably, 25-75 wt.%; more preferably, 30-60 wt.%, based on the total washcoat loading of the second catalytic region.

The second OSC material loading in the second catalytic region can be less than 2 $g/in^3$. In some embodiments, the second OSC material loading in the second catalytic region is no greater than 1.5 $g/in^3$, 1.2 $g/in^3$, 1 $g/in^3$, 0.8 $g/in^3$, or 0.7 $g/in^3$.

In some embodiments, the second OSC material can have a pore: volume of at least 0.4 mL/g; preferably, at least 0.5 mL/g; more preferably, at least 0.6 mL/g. Alternatively, in some embodiments, the second OSC material can have a pore: volume of 0.4 to 1.0 mL/g; 0.5 to 0.9 mL/g; 0.5 to 0.8 mL/g; or 0.6 to 0.8 mL/g.

In some embodiments, the second catalytic region can have a washcoat porosity of less than 50 %, less than 40 %, less than 30% or less than 20%. Alternatively, in some embodiments, the second catalytic region can have a washcoat porosity of 5% to 50 %; 10% to 40%; 10% to 30%; or 10% to 20%.

In some embodiments, the second OSC material can have an average pore diameter of at least 20 nm, according to the basic premises of the classical BJH treatment. The average pore diameter can be measured by nitrogen adsorption/desorption isotherms at 76 K. The samples are outgassed at 350 °C for 2 hours prior to the adsorption run.

In certain embodiments, the second OSC material can have a fresh specific surface area (SSA) of at least 50 $m^2/g$. In further embodiments, the second OSC material can have an SSA of at least 60 $m^2/g$, or at least 70 $m^2/g$. The SSA can be measured by nitrogen adsorption/desorption isotherms at 76 K. The samples are outgassed at 350 °C for 2 hours prior to the adsorption run.

In certain embodiments, the second OSC material can have a particle size d50 of at least 5 $\mu$m; preferably, at least 10 $\mu$m. In some embodiments, the second OSC material can have a particle size d90 of at least 15 $\mu$m; preferably, at least 20 $\mu$m. Alternatively, in certain embodiments, the second OSC material can have a particle size d50 of 5-20

$\mu$m; preferably, 7-15 $\mu$m. In some embodiments, the second OSC material can have a particle size d90 of 15-40 $\mu$m; preferably, 20-30 $\mu$m.

In some embodiments, the second OSC material can maintain majority of its material pore structure (e.g., SSA, average pore diameter, and/or pore: volume) after the catalytic article is aged at 1000 °C for 20 hours (*e.g.,* in a static oven). In certain embodiments, the second OSC material can have an average pore diameter of greater than 15 nm after aging; preferably, can have an average pore diameter of at least 20 nm after aging. In certain embodiments, the second OSC material can have an SSA of at least 45 m$^2$/g after aging; preferably, can have an SSA of at least 50 m$^2$/g after aging. In some embodiments, the second OSC material can have a pore: volume of greater than 0.2 mL/g after aging; preferably, can have a pore: volume difference of at least 0.25 mL/g or at least 0.3 mL/g.

The second alkali or alkaline earth metal is preferably barium, strontium, mixed oxides or composite oxides thereof. Preferably the barium or strontium, where present, is in an amount of 0.1 to 15 wt.%, and more preferably 3 to 10 wt.% of barium or strontium, based on the total weight of the second catalytic region.

It is even more preferable that the second alkali or alkaline earth metal is strontium. The strontium, where present, is preferably present in an amount of 0.1 to 15 wt.%, and more preferably 3 to 10 wt.%, based on the total weight of the second catalytic region.

It is also preferable that the second alkali or alkaline earth metal is mixed oxides or composite oxide of barium and strontium. Preferably, the mixed oxides or composite oxide of barium and strontium is present in an amount of 0.1 to 15 wt.%, and more preferably 3 to 10 wt.%, based on the total weight of the second catalytic region. It is more preferable that the second alkali or alkaline earth metal is composite oxide of barium and strontium.

Preferably the barium or strontium is present as $BaCO_3$ or $SrCO_3$. Such a material can be performed by any method known in the art, for example incipient wetness impregnation or spray-drying.

The second inorganic oxide is preferably an oxide of Groups 2, 3, 4, 5, 13 and 14 elements. The second inorganic oxide is preferably selected from the group consisting of alumina, magnesia, silica, zirconia, barium oxides, and mixed oxides or composite oxides thereof. Particularly preferably, the second inorganic oxide is alumina, lanthanum-alumina, zirconia, or a magnesia/alumina composite oxide. One especially preferred second inorganic oxide is alumina or lanthanum-alumina.

The second OSC material and the second inorganic oxide can have a weight ratio of no greater than 10:1; preferably, no greater than 8:1 or 5:1; more preferably, no greater than 4:1 or 3:1; most preferably, no greater than 2:1.

Alternatively, the second OSC material and the second inorganic oxide can have a weight ratio of 10: 1 to 1:10; preferably, 8:1 to 1:8 or 5:1 to 1:5; more preferably, 4:1 to 1:4 or 3:1 to 1:3; and most preferably, 2:1 to 1:2.

In some embodiments, the second OSC material and the second inorganic oxide can have a weight ratio of no less than 2:1. In further embodiments, the second OSC material and the second inorganic oxide can have a weight ratio of no less than 10:1. In another further embodiments, the second OSC material and the second inorganic oxide can have a weight ratio of no less than 20:1 or no less than 30:1. In yet another further embodiments, the second OSC material and the second inorganic oxide can have a weight ratio of no less than 40:1 or no less than 50:1.

The total washcoat loading of the second catalytic region can be less than 3.5 g/in$^3$; preferably, less than 3.0 g/in$^3$ or 2.5 g/in$^3$. Alternatively, the total washcoat loading of the first catalytic region can be from 0.5 to 3.5 g/in$^3$; preferably, can be from 0.6 to 3 g/in$^3$ or 0.7 to 2.5 g/in$^3$.

The second catalytic region can extend for 100 percent of the axial length L. (*E.g., see* **FIGs. 2a** and **2b**).

The second catalytic region can extend for 10 to 95 percent of the axial length L. Preferably, for 20 to 90 percent, more preferably, 30 to 80 percent of the axial length L. (*E.g., see* **FIGs. 3a** and **3b**).

In some embodiments, the first catalytic region can be supported/deposited directly on the substrate (*E.g., see* **FIGs. 2a** and **3b**). In certain embodiments, the second catalytic region can be supported/deposited directly on the substrate (*E.g., see* **FIGs. 2b** and **3a**).

*Third Catalytic Region*

The catalytic article may further comprise a third catalytic region.

The third catalytic region can further comprise a third PGM component, a third oxygen storage capacity (OSC) material, a third alkali or alkaline earth metal component, and/or a third inorganic oxide.

The third PGM component can be selected from the group consisting of platinum, palladium, rhodium, and a mixture thereof. In some embodiments, the third PGM component can be Pd, Rh or a mixture thereof.

The third OSC material can be cerium oxide, zirconium oxide, a ceria-zirconia mixed oxide, an alumina-ceria-zirconia mixed oxide, or a combination thereof. More preferably, the third OSC material comprises the ceria-zirconia mixed oxide, the alumina-ceria-zirconia mixed oxide, or a combination thereof. In addition, the third OSC material may further comprise one or more of dopants like lanthanum, neodymium, praseodymium, yttrium *etc.* Moreover, the third OSC material may have the function as a support material for the third PGM component. In some embodiments, the third OSC material comprises the ceria-zirconia mixed oxide and the alumina-ceria-zirconia mixed oxide.

The ceria-zirconia mixed oxide can have a weight ratio of zirconia to ceria at least 50:50; preferably, higher than 60:40; more preferably, higher than 75:25. Alternatively, the ceria-zirconia mixed oxide also can have a weight ratio of ceria to zirconia less than 50:50; preferably, less than 40:60; more preferably, less than 25:75.

The third OSC material (*e.g.*, ceria-zirconia mixed oxide) can be from 10 to 90 wt.%; preferably, 25-75 wt.%; more preferably, 30-60 wt.%, based on the total washcoat loading of the third catalytic region.

The third OSC material loading in the third catalytic region can be less than 1.5 $g/in^3$. In some embodiments, the third OSC material loading in the second catalytic region is no greater than 1.2 $g/in^3$, 1.0 $g/in^3$, 0.9 $g/in^3$, 0.8 $g/in^3$, or 0.7 $g/in^3$.

The total washcoat loading of the third catalytic region can be less than 3.5 $g/in^3$; preferably, no more than 3.0 $g/in^3$, 2.5 $g/in^3$, or 2 $g/in^3$.

In some embodiments, the third OSC material can have a pore: volume of at least 0.4 mL/g; preferably, at least 0.5 mL/g; more preferably, at least 0.6 mL/g. Alternatively, in some embodiments, the third OSC material can have a pore: volume of 0.4 to 1.0 mL/g; 0.5 to 0.9 mL/g; 0.5 to 0.8 mL/g; or 0.6 to 0.8 mL/g.

In some embodiments, the third catalytic region can have a washcoat porosity of less than 50 %, less than 40 %, less than 30% or less than 20%. Alternatively, in some embodiments, the third catalytic region can have a washcoat porosity of 5% to 50 %; 10% to 40%; 10% to 30%; or 10% to 20%.

In some embodiments, the third OSC material can have an average pore diameter of at least 20 nm, according to the basic premises of the classical BJH treatment. The average pore diameter can be measured by nitrogen adsorption/desorption isotherms at 76 K. The samples are outgassed at 350 °C for 2 hours prior to the adsorption run.

In certain embodiments, the third OSC material can have a fresh specific surface area (SSA) of at least 50 $m^2/g$. In further embodiments, the third OSC material can have an SSA of at least 60 $m^2/g$, or at least 70 $m^2/g$. The SSA can be measured by nitrogen adsorption/desorption isotherms at 76 K. The samples are outgassed at 350 °C for 2 hours prior to the adsorption run.

In certain embodiments, the third OSC material can have a particle size d50 of at least 5 $\mu$m; preferably, at least 10 $\mu$m. In some embodiments, the third OSC material can have a particle size d90 of at least 15 $\mu$m; preferably, at least 20 $\mu$m. Alternatively, in certain embodiments, the third OSC material can have a particle size d50 of 5-20 $\mu$m; preferably, 7-15 $\mu$m. In some embodiments, the third OSC material can have a particle size d90 of 15-40 $\mu$m; preferably, 20-30 $\mu$m.

In some embodiments, the third OSC material can maintain majority of its material pore structure (*e.g.*, SSA, average pore diameter, and/or pore: volume) after the catalytic article is aged at 1000 °C for 20 hours (*e.g.,* in a static oven). In certain embodiments, the third OSC material can have an average pore diameter of greater than 15 nm after aging; preferably, can have an average pore diameter of at least 20 nm after aging. In certain embodiments, the third OSC material can have an SSA of at least 45 $m^2/g$ after aging; preferably, can have an SSA of at least 50 $m^2/g$ after aging. In some embodiments, the third OSC material can have a pore: volume of greater than 0.2 mL/g after aging; preferably, can have a pore: volume difference of at least 0.25 mL/g or at least 0.3 mL/g.

The third alkali or alkaline earth metal is preferably barium, strontium, mixed oxides or composite oxides thereof. Preferably the barium or strontium, where present, is in an amount of 0.1 to 15 wt.%, and more preferably 3 to 10 wt.% of barium or strontium, based on the total weight of the third catalytic region.

It is even more preferable that the third alkali or alkaline earth metal is strontium. The strontium, where present, is preferably present in an amount of 0.1 to 15 wt.%, and more preferably 3 to 10 wt.%, based on the total weight of the third catalytic region.

It is also preferable that the third alkali or alkaline earth metal is mixed oxides or composite oxide of barium and strontium. Preferably, the mixed oxides or composite oxide of barium and strontium is present in an amount of 0.1 to 15 wt.%, and more preferably 3 to 10 wt.%, based on the total weight of the third catalytic region. It is more preferable that the third alkali or alkaline earth metal is composite oxide of barium and strontium.

Preferably the barium or strontium is present as $BaCO_3$ or $SrCO_3$. Such a material can be performed by any method known in the art, for example incipient wetness impregnation or spray-drying.

The third inorganic oxide is preferably an oxide of Groups 2, 3, 4, 5, 13 and 14 elements. The third inorganic oxide is preferably selected from the group consisting of alumina, magnesia, silica, zirconia, barium oxides, and mixed oxides or composite oxides thereof. Particularly preferably, the third inorganic oxide is alumina, lanthanum-alumina, zirconia, or a magnesia/alumina composite oxide. One especially preferred third inorganic oxide is alumina or lanthanum-alumina.

The third OSC material and the third inorganic oxide can have a weight ratio of no greater than 10:1; preferably, no greater than 8:1 or 5:1; more preferably, no greater than 4:1 or 3:1; most preferably, no greater than 2:1.

Alternatively, the third OSC material and the third inorganic oxide can have a weight ratio of 10:1 to 1:10; preferably, 8:1 to 1:8 or 5:1 to 1:5; more preferably, 4:1 to 1:4 or 3:1 to 1:3; and most preferably, 2:1 to 1:2.

In some embodiments, the third OSC material and the third inorganic oxide can have a weight ratio of no less than 2:1. In further embodiments, the third OSC material and the third inorganic oxide can have a weight ratio of no less than 10:1. In another further embodiments, the third OSC material and the third inorganic oxide can have a weight ratio of no less than 20:1 or no less than 30:1. In yet another further embodiments, the third OSC material and the third inorganic oxide can have a weight ratio of no less than 40:1 or no less than 50:1.

The third catalytic region can extend for 100 percent of the axial length L. Alternatively, the third catalytic region can be less than the axial length L, for example, no greater than 60%, 50%, 40%, or 30% of the axial length L (*e.g., see* **FIGs**. **3a** and **3b**).

As demonstrated in the Examples below, the catalyst article in this aspect can be applied as a TWC catalyst for treating exhaust gas produced by gasoline engines.

*Substrate*

Preferably the substrate is a flow-through monolith. Alternatively, the substrate can be a wall-flow filter.

The flow-through monolith substrate has a first face and a second face defining a longitudinal direction there between. The flow-through monolith substrate has a plurality of channels extending between the first face and the second face. The plurality of channels extends in the longitudinal direction and provide a plurality of inner surfaces (e.g. the surfaces of the walls defining each channel). Each of the plurality of channels has an opening at the first face and an opening at the second face. For the avoidance of doubt, the flow-through monolith substrate is not a wall flow filter.

The first face is typically at an inlet end of the substrate and the second face is at an outlet end of the substrate.

The channels may be of a constant width and each plurality of channels may have a uniform channel width.

Preferably within a plane orthogonal to the longitudinal direction, the monolith substrate has from 300 to 900 channels per square inch, preferably from 400 to 800. For example, on the first face, the density of open first channels and closed second channels is from 600 to 700 channels per square inch. The channels can have cross sections that are rectangular, square, circular, oval, triangular, hexagonal, or other polygonal shapes.

The monolith substrate acts as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates are well known in the art.

It should be noted that the flow-through monolith substrate described herein is a single component (i.e. a single brick). Nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst article of the present comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

In embodiments wherein the catalyst article of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

Another aspect of the present disclosure is directed to a method for treating a vehicular exhaust gas containing $NO_x$, CO, and HC using the catalyst article described herein. Catalytic converters equipped with the TWC made according to this method show improved catalytic properties compared to conventional TWC (with the same PGM loading), also show especially improved performance in high-speed stage and better $NO_x$ slip reduction performance (*e.g., see* Example 3; and **Tables 3a** and **3b**).

Another aspect of the present disclosure is directed to a system for treating vehicular exhaust gas comprising the catalyst article described herein in conjunction with a conduit for transferring the exhaust gas through the system.

DEFINTIONS

The term "region" as used herein refers to an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

Typically, the "region" has a substantially uniform length. The reference to a "substantially uniform length" in this context refers to a length that does not deviate (e.g. the difference between the maximum and minimum length) by more than 10%, preferably does not deviate by more than 5 %, more preferably does not deviate by more than 1 %, from its mean value.

It is preferable that each "region" has a substantially uniform composition (i.e. there is no substantial difference in the composition of the washcoat when comparing one part of the region with another part of that region). Substantially uniform composition in this context refers to a material (e.g., region) where the difference in composition when comparing one part of the region with another part of the region is 5% or less, usually 2.5% or less, and most commonly 1% or less.

The term "zone" as used herein refers to a region having a length that is less than the total length of the substrate, such as ≤ 75 % of the total length of the substrate. A "zone" typically has a length (*i.e.* a substantially uniform length) of at least 5% (*e.g.* ≥ 5 %) of the total length of the substrate.

The total length of a substrate is the distance between its inlet end and its outlet end (*e.g.* the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

When the substrate is a wall-flow filter, then generally any reference to a "zone disposed at an inlet end of the substrate" refers to a zone disposed or supported on the substrate that is:

(a) nearer to an inlet end (e.g. open end) of an inlet channel of the substrate than the zone is to a closed end (e.g. blocked or plugged end) of the inlet channel, and/or
(b) nearer to a closed end (e.g. blocked or plugged end) of an outlet channel of the substrate than the zone is to an outlet end (e.g. open end) of the outlet channel.

Thus, the midpoint of the zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.

Similarly, any reference to a "zone disposed at an outlet end of the substrate" when the substrate is a wall-flow filter refers to a zone disposed or supported on the substrate that is:

(a) nearer to an outlet end (e.g. an open end) of an outlet channel of the substrate than the zone is to a closed end (e.g. blocked or plugged) of the outlet channel, and/or
(b) nearer to a closed end (e.g. blocked or plugged end) of an inlet channel of the substrate than it is to an inlet end (e.g. an open end) of the inlet channel.

Thus, the midpoint of the zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.

A zone may satisfy both (a) and (b) when the washcoat is present in the wall of the wall-flow filter (i.e. the zone is in-wall).

The term "washcoat" is well known in the art and refers to an adherent coating that is applied to a substrate usually during production of a catalyst.

The acronym "PGM" as used herein refers to "platinum group metal". The term "platinum group metal" generally refers to a metal selected from the group consisting of Ru, Rh, Pd, Os, Ir and Pt, preferably a metal selected from the group consisting of Ru, Rh, Pd, Ir and Pt. In general, the term "PGM" preferably refers to a metal selected from the group consisting of Rh, Pt and Pd.

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The expression "consist essentially" as used herein limits the scope of a feature to include the specified materials or steps, and any other materials or steps that do not materially affect the basic characteristics of that feature, such as for example minor impurities. The expression "consist essentially of' embraces the expression "consisting of".

Any reference to an amount of dopant, particularly a total amount, expressed as a % by weight as used herein refers to the weight of the support material or the refractory metal oxide thereof.

The term "loading" as used herein refers to a measurement in units of $g/ft^3$ on a metal weight basis.

Where the present specification refers to "a" or "an", this encompasses the singular and plural forms.

The following examples merely illustrate the invention. Those skilled in the art will recognize many variations that are within the spirit of the invention and scope of the claims.

EXAMPLES

Materials

All materials are commercially available and were obtained from known suppliers, unless noted otherwise.

Comparative Catalyst A:

Comparative Catalyst A is a developed three-way (Pd-Rh) catalyst with a partially double-layered zone structure.

*First Catalytic Region:*

The first catalytic region consists of Rh supported on a washcoat of a first CeZr mixed oxide (OSC 1) and La-stabilized alumina. The washcoat loading of the first catalytic region was about 1.7 $g/in^3$ with 4.2 $g/ft^3$ of Rh loading.
This washcoat was coated from the outlet face of the ceramic substrate containing the second catalytic region from below, using standard coating procedures with coating depth targeted of 70 % of the substrate length, dried at 90 °C.

*Second Catalytic Region:*

The second catalytic region consists of Pd supported on a washcoat of a second CeZr mixed oxide, La-stabilized alumina, and Ba promotor. The washcoat loading of the second catalytic region was about 1.7 $g/in^3$ with a Pd loading of 21 $g/ft^3$.
This washcoat was coated from the outlet face of a ceramic substrate (600 cpsi, 2.5 mil wall thickness) using standard coating procedures with coating depth targeted of 70% of the substrate length, dried at 90 °C and calcined at 500 °C for 45 mins.

*Third Catalytic Region:*

The third catalytic region consists of Pd and Rh supported on a washcoat of a first CeZr mixed oxide, La-stabilized alumina, and Ba promotor. The washcoat loading of the third catalytic region was about 1.5 $g/in^3$ with a 144 $g/ft^3$ of Pd and of 4.2 $g/ft^3$ of Rh loading.
The third washcoat was then coated from the inlet face of the ceramic substrate containing the first and the second catalytic regions from above, using standard coating procedures with coating depth targeted of 30 % of the substrate length, dried at 90 °C and calcined at 500 °C for 45 mins.
The coating order was second, first and third region. (*E.g., see* **FIG. 3a**).

Catalyst B:

Catalyst B was prepared according to the similar procedure as Catalyst A with the exception that the first OSC and its washcoat porosities were changed to high porosity in the first catalytic region (OSC 2). (*E.g., see* **FIG. 3a**).
**Table A** below summarizes ceria loading in each catalytic region of Comparative Catalyst A and Catalyst B.

**Table A Ceria loading in Catalyst B**

|  | 1st Catalytic Region | 2nd Catalytic Region | 3rd Catalytic Region |
|---|---|---|---|
|  | $CeO_2$ loading ($g/in^3$) | $CeO_2$ loading ($g/in^3$) | $CeO_2$ loading ($g/in^3$) |
| Comparative Catalyst A | 0.13 | 0.29 | 0.14 |
| Catalyst B | 0.13 | 0.29 | 0.14 |

**Table B** below summarizes OSC specification in first catalytic region of Comparative Catalyst A and Catalyst B: OSC 1 and OSC 2.

**Table B OSC specification in Comparative Catalyst A and Catalyst B**

| | OSC 1 (in Comparative Catalyst A) | OSC 2 (in Catalyst B) |
|---|---|---|
| SSA ($m^2$/g) Fresh | 63 | 74 |
| SSA ($m^2$/g) Aged* | 43 | 54 |
| PV (mL/g) Fresh | 0.32 | 0.68 |
| PV (mL/g) Aged* | 0.20 | 0.32 |
| Aver. Pore Dia. (nm) Fresh | 17 | 28 |
| Aver. Pore Dia. (nm) Aged* | 15 | 24 |
| Particle size d50 Fresh ($\mu$m) | 4 | 11 |
| Particle size d90 Fresh ($\mu$m) | 11 | 23 |
| *Aged: OSCs were aged at 1000 °C for 20 hours in a static oven. | | |

EXAMPLE 1: Back Pressure Performances

The Back Pressure (BP) performances of Comparative Catalyst A and Catalyst B were tested over a gas flow mater equipment. As shown **Table 1**, Catalyst B of the present invention present equivalent BP when compared with Comparative Catalyst A.

**Table 1 Back Pressure Results**

| Sample | Back pressure [kPa] | Relative BP [%] |
|---|---|---|
| Comparative Catalyst A | 10.5 | 100 |
| Catalyst B | 10.2 | 97 |

EXAMPLE 2: Washcoat Porosity Impacts

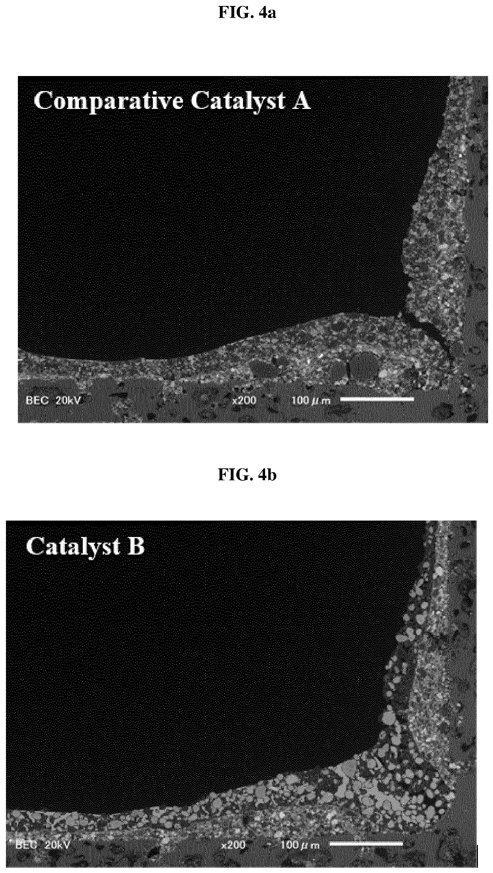

The washcoat (WC) porosity of Comparative Catalyst A and Catalyst B were measured by scanning electron microscope (SEM). **FIGs. 4a** and **4b** showed cross sectional images of the catalyst structure of the 100 mm of catalyst brick from gas inlet which demonstrated porous structure in the upper layer (first catalytic region) at Catalyst B (**FIG. 4b**) compared to Comparative Catalyst A (**FIG. 4a**).

**Table 2** below summarizes the porosity of first catalyst region by binary image of SEM analysis in **FIGs**. **4a** and **4b**. The binary image was calculated by using WinROOF. The green area in **FIGs**. **4a** and **4b** is a non-washcoat area which calculated following equation:

$$\text{Washcoat porosity [\%]} = \text{non-washcoat area} / (\text{non-washcoat area} + \text{washcoat area}) \times 100$$

Porosity of Catalyst B had about 4 times higher than that of Comparative Catalyst A.

**Table 2 Catalyst porosity of first catalytic region (calculated by SEM binary image)**

| Sample | Magnification | Non WC area | Calculated area | Porosity [%] |
|---|---|---|---|---|
| | x200-1 | 653 | 17979 | 3.6 |
| Comparative Catalyst A | ×200-2 | 702 | 15468 | 4.5 |
| Catalyst B | ×200-1 | 3801 | 22430 | 16.9 |
| | ×200-2 | 2940 | 18109 | 16.2 |

EXAMPLE 3: VEHICLE TESTING PROCEDURES AND RESULTS

Comparative Catalyst A and Catalyst B were bench aged under 4.3-L engine in the same run for 50 hours with four mode aging cycle, with peak bed temperature at 1000 °C of the catalysts.

The bench aged samples of Comparative Catalyst A and Catalyst B were then tested separately over a vehicle of 1.0-liter engine with a 3 bag worldwide harmonized light duty driving test cycles (WLTC).

Bag data from the tailpipe are shown in **Tables 3a** and **3b (Bag 3: high speed stage)**. As shown in **Table 3a,** Catalyst B of the present invention showed over 20% improved $NO_x$ reduction performance when compared with Comparative Catalyst A.

**Table 3a Results of Exhaust Emissions by Vehicle Diluted Bag Data**

|  | WLTC overall Exhaust Emissions (mg/km) | | | |
|---|---|---|---|---|
|  | THC | NMHC | CO | $NO_x$ |
| **Comparative Catalyst A** | 24.2 | 21.7 | 386.3 | 17.1 |
| **Catalyst B** | 24.0 | 21.5 | 369.5 | 13.6 |

More significantly, at high speed stage (relative Bag 3 $NO_x$ emission), Catalyst B of the present invention showed over 79 % of improved $NO_x$ emission reduction compared to Comparative Catalyst A.

**Table 3b Results of Exhaust Emissions by Vehicle Diluted Bag 3 Data**

|  | Bag 3 Exhaust Emissions (mg/km) | | | |
|---|---|---|---|---|
|  | THC | NMHC | CO | $NO_x$ |
| **Comparative Catalyst A** | 1.6 | 1.2 | 96.7 | 4.8 |
| **Catalyst B** | 1.7 | 1.4 | 104.3 | 1.0 |

**Claims**

1. A catalytic article for treating exhaust gas comprising:

    a substrate comprising an inlet end and an outlet end with an axial length L;
    a first catalytic region comprising a first platinum group metal (PGM) component and
    a first oxygen storage capacity (OSC) material, wherein the first catalytic region has a washcoat porosity of less than 50%; and wherein the first OSC material has a pore: volume of at least 0.4 mL/g.

2. The catalytic article of claim 1, wherein the first OSC material is cerium oxide, a ceria-zirconia mixed oxide, an alumina-ceria-zirconia mixed oxide, or a combination thereof.

3. The catalytic article of claim 1 or 2, wherein the first catalytic region further comprises a first inorganic oxide.

4. The catalytic article of claim 3, wherein the first inorganic oxide is selected from the group consisting of alumina, magnesia, silica, zirconia, lanthanum, neodymium, praseodymium, yttrium oxides, and mixed oxides or composite oxides thereof.

5. The catalytic article of any one of the preceding claims, wherein the first OSC material has an average pore diameter of at least 20 nm.

6. The catalytic article of any one of the preceding claims, wherein the first OSC material has an average pore diameter of greater than 15 nm after the first OSC material is aged at 1000 °C for 20 hours.

7. The catalytic article of any one of the preceding claims, wherein the first OSC material has a fresh specific surface area (SSA) of at least 50 $m^2$/g.

8.  The catalytic article of any one of the preceding claims, wherein the first OSC material has an SSA of at least 45 m$^2$/g after the first OSC material is aged at 1000 °C for 20 hours.

9.  The catalytic article of any one of the preceding claims, wherein the first OSC material has a pore: volume of greater than 0.2 mL/g after the first OSC material is aged at 1000 °C for 20 hours.

10. The catalytic article of any one of the preceding claims, wherein the first catalytic region has a washcoat porosity of less than 40%.

11. The catalytic article of any one of the preceding claims, wherein the first PGM component is selected from the group consisting of platinum, palladium, rhodium, and a mixture thereof.

12. The catalytic article of any one of the preceding claims, further comprising a second catalytic region.

13. The catalytic article of claim 12, wherein the second catalytic region comprises a second platinum group metal (PGM) component.

14. The catalytic article of claim 13, wherein the second PGM component is selected from the group consisting of platinum, palladium, rhodium, and a mixture thereof.

15. The catalytic article of any one of the preceding claims is a three-way catalyst (TWC).

**FIG. 1**

Inlet                                                                    Outlet

1st Catalytic Region

Substrate Wall

**FIG. 2a**

                                                            Outlet
Inlet

2nd Catalytic Region

1st Catalytic Region

Substrate Wall

**FIG. 2b**

                                                            Outlet
Inlet

1st Catalytic Region

2nd Catalytic Region

Substrate Wall

**FIG. 3a**

Inlet

1st Cat Region

3rd Cat Region

2nd Cat Region

substrate

**FIG. 3b**

Inlet

2nd Cat Region

3rd Cat Region

1st Cat Region

substrate

FIG. 4a

FIG. 4b

Europäisches
Patentamt

European
Patent Office

Office européen
des brevets

# EUROPEAN SEARCH REPORT

Application Number

**EP 21 19 7894**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/120953 A1 (JOHNSON MATTHEY PLC [GB]) 18 June 2020 (2020-06-18) * claims; examples * ----- | 1-15 | INV. B01J23/40 B01D53/94 B01J35/10 |
| X | WO 2020/065573 A1 (JOHNSON MATTHEY PLC [GB]) 2 April 2020 (2020-04-02) * claims; examples * ----- | 1-15 | |
| E | WO 2021/198643 A1 (JOHNSON MATTHEY PLC [GB]) 7 October 2021 (2021-10-07) * claims; examples * ----- | 1-15 | |
| | | | TECHNICAL FIELDS SEARCHED (IPC) B01J B01D |

The present search report has been drawn up for all claims

| Place of search | Date of completion of the search | Examiner |
|---|---|---|
| **The Hague** | **26 January 2022** | **Schoofs, Bart** |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 7894

This annex lists the patent family members relating to the patent documents cited in the above-mentioned European search report.
The members are as contained in the European Patent Office EDP file on
The European Patent Office is in no way liable for these particulars which are merely given for the purpose of information.

26-01-2022

| Patent document cited in search report | | | Publication date | Patent family member(s) | | | Publication date |
|---|---|---|---|---|---|---|---|
| WO 2020120953 | A1 | | 18-06-2020 | BR | 112021006517 | A2 | 06-07-2021 |
| | | | | CN | 112805089 | A | 14-05-2021 |
| | | | | EP | 3894071 | A1 | 20-10-2021 |
| | | | | GB | 2581419 | A | 19-08-2020 |
| | | | | US | 2020188887 | A1 | 18-06-2020 |
| | | | | WO | 2020120953 | A1 | 18-06-2020 |
| WO 2020065573 | A1 | | 02-04-2020 | GB | 2579878 | A | 08-07-2020 |
| | | | | US | 2020102868 | A1 | 02-04-2020 |
| | | | | WO | 2020065573 | A1 | 02-04-2020 |
| WO 2021198643 | A1 | | 07-10-2021 | EP | 3889404 | A1 | 06-10-2021 |
| | | | | US | 2021301698 | A1 | 30-09-2021 |
| | | | | WO | 2021198643 | A1 | 07-10-2021 |

EPO FORM P0459

For more details about this annex : see Official Journal of the European Patent Office, No. 12/82